# EUROPEAN PATENT SPECIFICATION

(11) **EP 2 577 556 B1**
(45) Date of publication and mention of the grant of the patent: **16.11.2016**
(21) Application number: 11733704.8
(22) Date of filing: 06.06.2011
(51) Int. Cl.: G06K 7/00, G06K 19/077

(54) **A REMOVABLE MEMORY CARD WITH AN ANTENNA**
ENTFERNBARE SPEICHERKARTE MIT EINER ANTENNE
CARTE MÉMOIRE AMOVIBLE DOTÉE D'UNE ANTENNE

(30) Priority: 26.07.2010 SK 500332010; 07.06.2010 SK 500252010
(43) Date of publication of application: 10.04.2013
(73) Proprietor: SMK Corporation, Tokyo 142-8511 (JP)
(72) Inventor: FLOREK, Miroslav, 821 01 Bratislava (SK); MASARYK, Michal, 821 01 Bratislava (SK)
(74) Representative: Porubcan, Róbert
(86) International application number: PCT/IB2011/052464
(87) International publication number: WO 2011/154889

(56) References cited:
- WO-A2-2010/023574
- JP-A- 2008 083 867
- US-A1- 2004 021 218
- US-A1- 2005 062 672

## Description

### Technology

The solution refers to a removable memory card, that is basically of a flat shape, such as a removable memory card originally used to extend memory in mobile communication devices such as mobile phones. The removable memory card is equipped with an antenna for the creation of a contactless communication channel, especially of the NFC type (Near Field Communication). The solution describes a configuration that improves transmission characteristics of the antenna after the removable memory card is inserted into a corresponding slot; the solution describes the order of layers in this kind of memory card and it describes the composition of the removable memory card's body, which improves transmission features of the antenna. This solution is tied up to the previous patent application SK PP 00058-2008 from August 29th,2008 and to the patent application SK PP 50014-2009 from March 12th, 2009.

### Present technology

When the removable memory card is used in mobile communication devices to create an additional communication channel e.g. on the NFC platform, there arises a problem with shielding of a transmitting and receiving field of the antenna in case this antenna is located directly on the removable memory card. There are solutions that try to place the antenna in the form of an external part of the removable memory card, which protrudes from the slot of a mobile communication device. This solution creates protrusion that makes the operation with the mobile communication device difficult and due to what the universality of this kind of removable memory card is small since the recess of the slot to the level of the mobile communication device's external body can differ.

It is also possible to increase the transmitting power of the antenna, however this is energetically demanding and it also requires additional regulation, since the range of the antenna's shileding in the slots of various mobile communication devices can differ.

The existing configurations are characterized by a low stability of the antenna's transitting features - in these solutions the antenna is located directly in the body of the removable memory card. The solutions using an additional antenna (e.g. as in KF 20030017590, WO 02/056247) separate from the removable memory card are demanding on the adjustments that have to be made on the mobile communication device and also their first installation is complicated.

The solution according EP 1 933 259 suppposes making adjustments to the slot in a way so the antenna on the removable memory card would not be shielded by the slot's components. This configuration can be used only in case a new phone design is made, it cannot be used with existing devices. The disadvantage of this solution is also based on the fact that the mentioned configuration does not deal with the influence the phone's emission itself has on the antenna located on the removable memory card.

Since it can be supposed that the employment of removable memory cards in cashless payments that are described even in other Logomotion s.r.o. patent applications will grow and that this will require a creation of a secure and technically compact solution in the form of common removable memory card, especially of the microSD type, a solution that will enable serial, mass production of these removable memory cards having an antenna is required. These removable memory cards will be used in the slots of any type of mobile communication devices.

WO 2010/023574 is acknowledged in the preamble of claim 1.

### The subject matter of the invention

The invention is set out in claim 1.

The deficiencies mentioned are to a great extent eliminated by a removable memory card with an antenna that encompasses contacts, an antenna on the surface or in the body of the removable memory card. The subject matter of the antenna according to this invention lies in the fact that at least one part of the antenna is bordering the outer edge of the removable memory card. The outer edge of the removable memory card represents the edge that is opposite to the side where the removable memory card has its contacts. This outer edge is that edge of the removable memory card, which is directed outwards when the removable memory card is inserted into the mobile communication device's slot. This outer edge can even be directly visible or it can partially protrude from the mobile communication device's body or there can even be an opening so the removable memory card could be easily taken out using fingers.

In case of the current way of how the removable memory cards are inserted into the slots, the outer edge is the one opposite to the side with contacts. However, when the card is inserted into the slot, the side that is closest to the slot's entrance should be considered as the outer edge. Therefore, even a lateral side of the card could be considered as the outer edge in case the direction of the removable memory card's insertion would change, either now or in the future.

The placement of the antenna next to the outer edge is technically normal considering the tendency to increase the antenna's transmitting and receiving features; however the placement itself would not guarantee sufficient transmission features of the antenna, since the remaining part of tha antenna will be in the inner area of the slot, which shields the antenna. The required result would not be reached by reducing the size of the antenna's loops to parameters and shape that could be placed to the cross-section on the outer edge of the removable memory card. The removable memory cards are of small size and the antenna must be occupying a sufficient area of the removable memory card.

A substantial element of this solution is a ferrite-metal dual layer or a triple layer and its position with respect to the antenna. The dual layer consists of a ferrite layer that is covered by a metal layer from the outside. The triple layer consists of a ferrite layer that is in the middle and that is enclosed by metal layers. These layers are placed to at least one surface of the removable memory card in such a way that they cover one part of the antenna while the part of the antenna that is next to the outer edge or that is on the outer side of the removable memory card remains uncovered. The ferrite-metal dual layer or triple layer can be located on both surfaces of the removable memory card by which a skin effect will be increased; however, in principle it is possible to have even a configuration when only one surface of the removable memory card is covered.

The metal layer can be made of copper or aluminium or some other conductive material. The metal layer will be placed to the surface of the removable memory card in such a way so that it does not interfere with the contacts of the removable memory card's interface. The ferrite layer can be made of a mixture containing at least 50% of ferrite, preferably more that 60% of ferrite e.g. in the form of a powder filling material.

The coating of the removable memory card with a dual layer or a triple layer of ferrite and metal creates a skin effect that conducts, regulates the course of the electromagnetic field and emits it as if through a tunnel on the outer edge of the removable memory card.

The dual layer or the triple layer of ferrite and metal can be created in various ways. The ferrite layer connected to the metal layer can be in the form of a foil which is sticked to the removable memory card's surface using a connecting adhesive layer. It is suitable if the thickness of this kind of foil is between 50 and 200 µm. In case the thickness is 170 µm then good transmitting features are achieved at the desired frequency of 14,407 MHz.

In this kind of configuration the possibility of an exact tuning of the antenna set is reached by minimizing the influence of various slot constructions that can be formed by differently shaped metal mouldings according to the type and producer of the mobile communication device.

The antenna can be created on a PCB layer of the removable memory card body in the form of a two-layer wire loop of rectangular shape. The PCB layer can form the middle layer where the components are located on both sides of this PCB layer however the components can also be placed on one side of this layer. That being the case, the PCB layer is in the card's core but it is not directly in the center of the cross-section.

The antenna can be covered by the dual layer or triple layer of ferrite and metal in a various range. The layers can be covering a significant part of the antenna, or even the entire surface of the removable memory card however certain part of the antenna should not be shielded for the purpose of radiofrequency signal emission. At this point there exists a possibility of changing the respective share of the covered and the uncovered part of the antenna. A complete coverage would lower the antenna's emission but in the same time it would ensure a very stable operation of the communication channel. A small or no coverage of the antenna with the layers described would increase the transmitting power but it causes lower stability of the antenna's operation since the influence of the mobile communication device's emission on the function of the antenna on the removable memory card would be increased. Also, the influence of the specific shape and shielding of the slot would be increased.

It is suitable if the antenna's open area (the one not covered with the ferrite-metal dual-layer or triple layer) forms an uncovered zone with the width of up to two millimeters from the outer edge of the removable memory card. The open, unshielded area of the antenna can be even narrowed to match the parameters of the outer edge - in that kind of configuration the dual layer or the triple layer extends to the edge of the outer edge and the only part not covered is the outer edge itself.

The advantage of the metal layer on the outer visible surface of the removable memory card is also the possibility of creating a hologram on this metal layer. This hologram can carry the symbol, logo of the provider of the casheless payment realized thanks to hardware and software on the removable memory card.

The improvement of transmitting features can also be reached in a way that at least the external part of the card's case is made of a mixture of a binding material and the ferrite powder. In order to reach the required features, the mixture should contain at least 25% of ferrite powder, preferably more than 30% of the material volume.

Under the term ferrite powder it is necessary to understand any particles, fragments, crushed ferrite particles in the industrially processable form. The elements can be of various shape and granularity; it is convenient if the granularity is between 20 µm and 70 µm.

The ferrite powder can be placed into the material of the card's case by powder metallurgy or by immixing it into the binding material before pressure injecting the card's case. The penetration of the ferrite powder can be chosen in a way that the ferrite powder is located only in the part of the case which is contiguous to the antenna. Since the antenna will be placed mainly at the border of the outer edge, the ferrite powder can be placed selectively on this side of the card's case. The outer edge of the removable memory card represents the edge that is opposite to the side where the removable memory card has its contacts.This outer edge represents the edge of the removable memory card which is directed outwards when the removable memory card is inserted into the mobile communication device's slot. This outer edge can even be directly visible or it can partially protrude from the mobile communication device's body surface or there can even be an opening so the removable memory card could be easily taken out using fingers.In case of the current way of how the removable memory cards are inserted into the slots, the outer edge is the one opposite to the side with contacts. However, when the card is inserted into the slot, the side that is closest to the slot's entrance should be considered as the outer edge. Therefore, even a lateral side of the card could be considered as the outer edge in case the direction of the removable memory card's insertion would change, either now or in the future. The placement of the antenna next to the outer edge is technically normal considering the tendency to increase the antenna's transmitting and receiving features; however the placement itself would not guarantee sufficient transmission features of the antenna, since the remaining part of tha antenna will be in the inner area of the slot, which shields the antenna. The required result would not be reached by reducing the size of the antenna's loops to parameters and shape that could be placed to the cross-section on the outer edge of the removable memory card. The removable memory cards are of small size and the antenna must be occupying a sufficient area of the removable memory card.

The ferrite powder can be within the entire material volume of the card's body. Such a configuration makes the production easier, since the original plastic card body will be created from ferrite powder connected by binding material. In case of a different possible configuration, the ferrite powder can be in the entire material volume of the card's body with the exception of the outer edge. The insertion of ferrite elements into the card's body will regulate and stabilize the electromagnetic emission in the direction out from the slot in the mobile communication device and it will improve the possibility of an exact tuning of the antenna set by minimizing the influence of various slot constructions that can be formed by differently shaped metal mouldings according to the type and producer of the mobile communication device.

The subject matter of the new solution can be seen even in the new layering of the removable memory card with the antenna, where the order of the layers can be the following:
- metal layer;
- ferrite layer;
- connecting layer;
- first layer with components;
- connecting layer;
- PCB layer;
- connecting layer;
- second layer with components;
- connecting layer;
- ferrite layer;
- metal layer.

The advantages of the newly designed solution can be seen even in the following case of layering with only one component layer:
- metal layer;
- ferrite layer;
- layer with components;
- PCB layer;
- ferrite layer;
- metal layer.

In this layering there are no connecting layers since their connecting role is taken over by a suitably treated material of neighbouring layers e.g. the plastic substrate is melted on to the neighbouring layer, or the edges are caked on the powder metallurgy principle.

In case the ferrite-metal triple layer is used, the layering can be the following:
- metal layer;
- ferrite layer;
- metal layer;
- layer with components;
- PCB layer;
- metal layer;
- ferrite layer;
- metal layer.

The connecting layers can be in the form of a glue layer or they can be created by caking plastic material into the substrate of the neighbouring layer. In that case, the connecting layer will be made of diffuse intermeshing material of neighbouring layers.

In case of having the layers with two component layers the antenna can be divided into two parts, one part being in the first layer with components and the second part of the antenna being in the second layer with components. In doing so, these parts of the antenna set can be placed one above the other, separated by the PCB layer which will form a medial layer.

The double layer can be created in such a way that the ferrite layer is created by powder metallurgy. The surface of the ferrite layer can be equipped with a glue on one side and metal layer on the second side. The metal layer can be laid on by vaporization or by rolling the metal foil on. In case of a triple layer the metal layer can be laid on the ferrite layer by vaporization or in some other way to both sides of the ferrite layer and subsequently glue can be laid on one metal layer.

### Figure overview

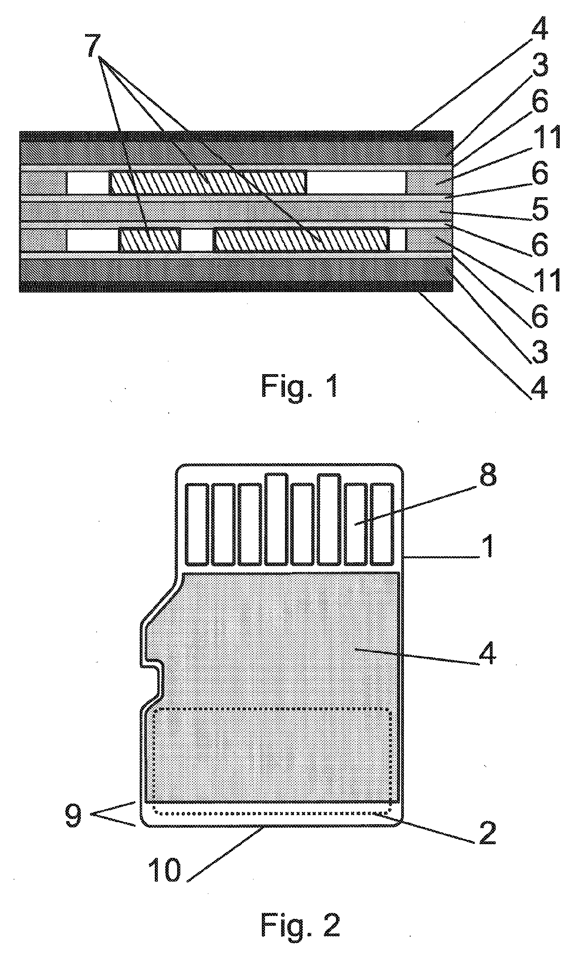

The solution is explained further on figures 1 to 14. However, on the figures, the individual layers are thicker so they would be more distinct. The thickness ration shown on the figures is not subject to protection and should not narrow the required extent of protection.

On the figure one there is a cross-section through the removable memory card's layers however the thickness of these layers in relation to each other and in relation to the width of the removable memory card is not shown to scale.

The figure 2 shows a view of the surface of the removable memory card, which depicts the location of the antenna and the overlayer of the antenna by a ferrite - metal double layer.

The figure 3 is a schematic representation of the antenna set with 3 +4 loops on both sides of the removable memory card's PCB layer.

On the figures 4 to 9 the individual layers of the removable memory card are gradually being uncovered while the blocks with components are shown schematically there.

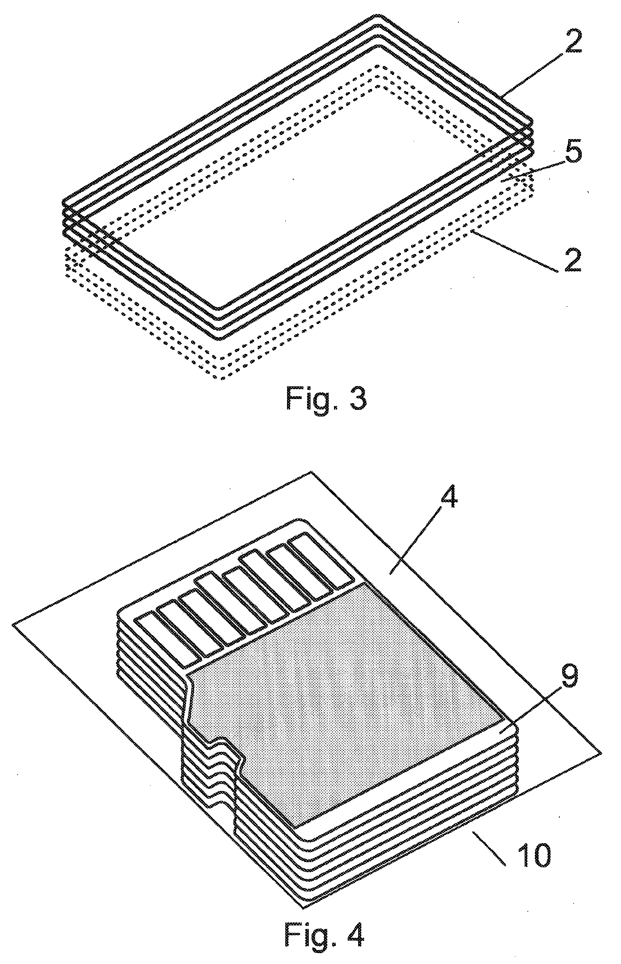

The figure 4 shows a view in the level of the upper metal layer.

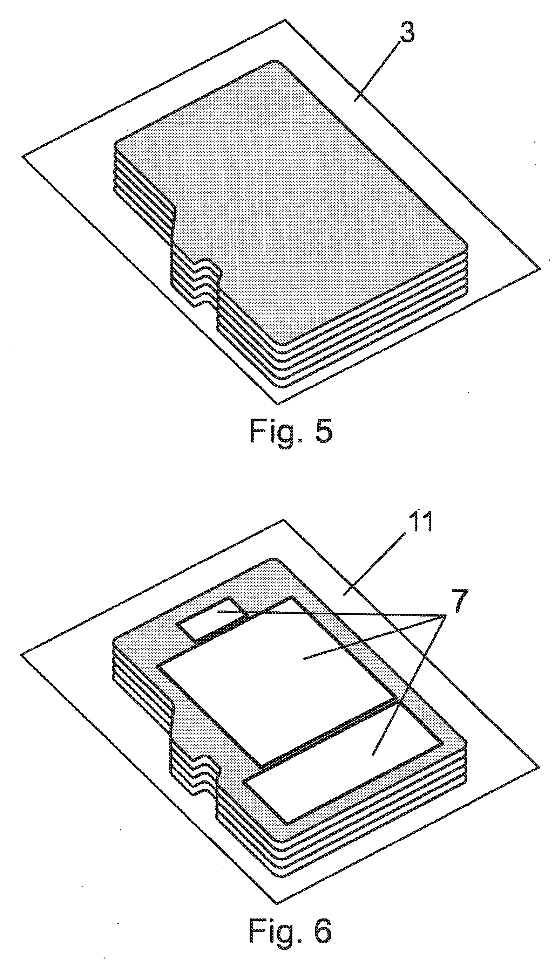

The figure 5 shows a view in the level of the upper ferrite layer.

The figure 6 shows the first layer with components after the dual layer is uncovered.

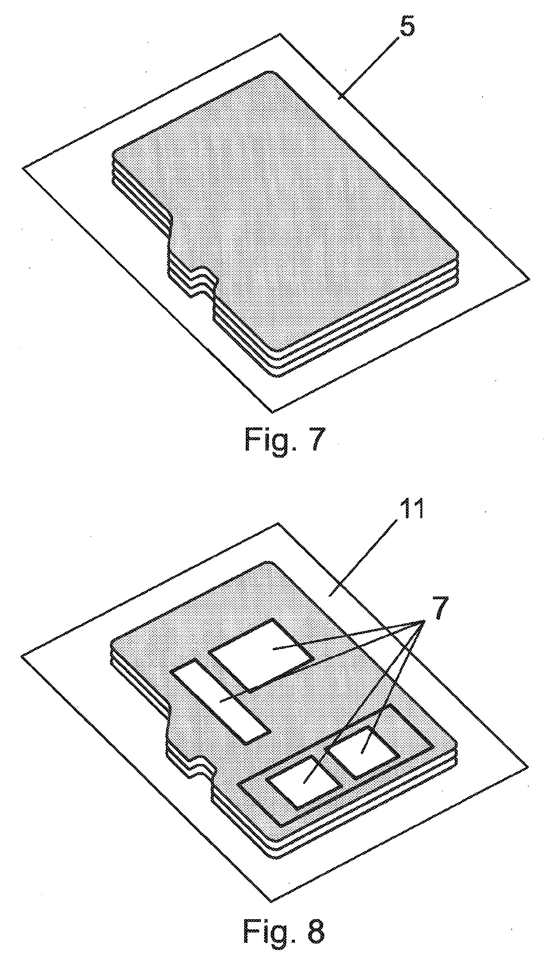

The figure 7 shows the PCB layer that is intended for placement of the antenna and in this examples the PCB is also a middle layer.

The figure 8 shows the second layer with components.

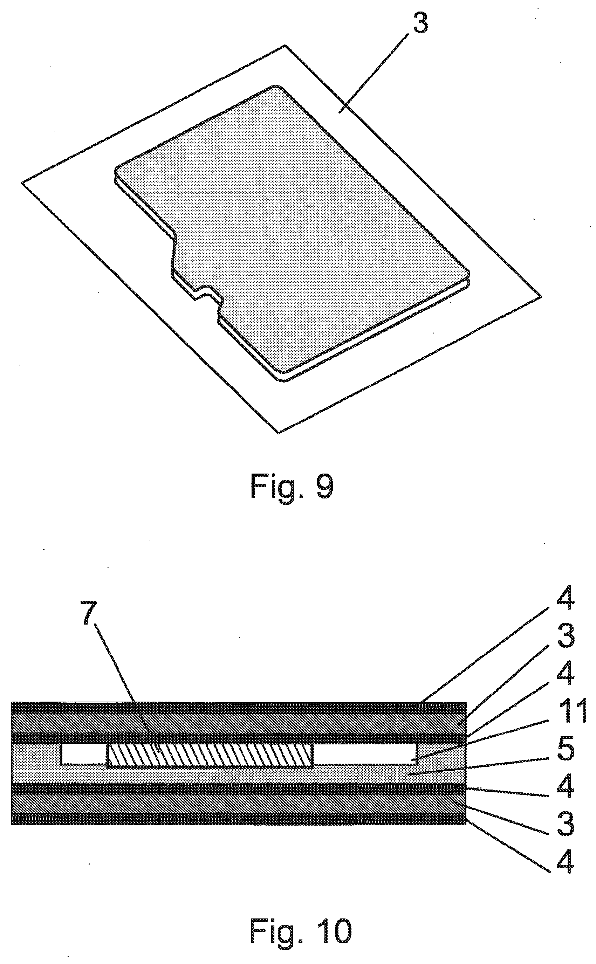

The figure 9 shows the lower ferrite layer.

On the figure 10 there is a cross-section of the layers of the removable memory card with one component layer and with the usage of a ferrite-metal triple layer on both surfaces of the removable memory card.

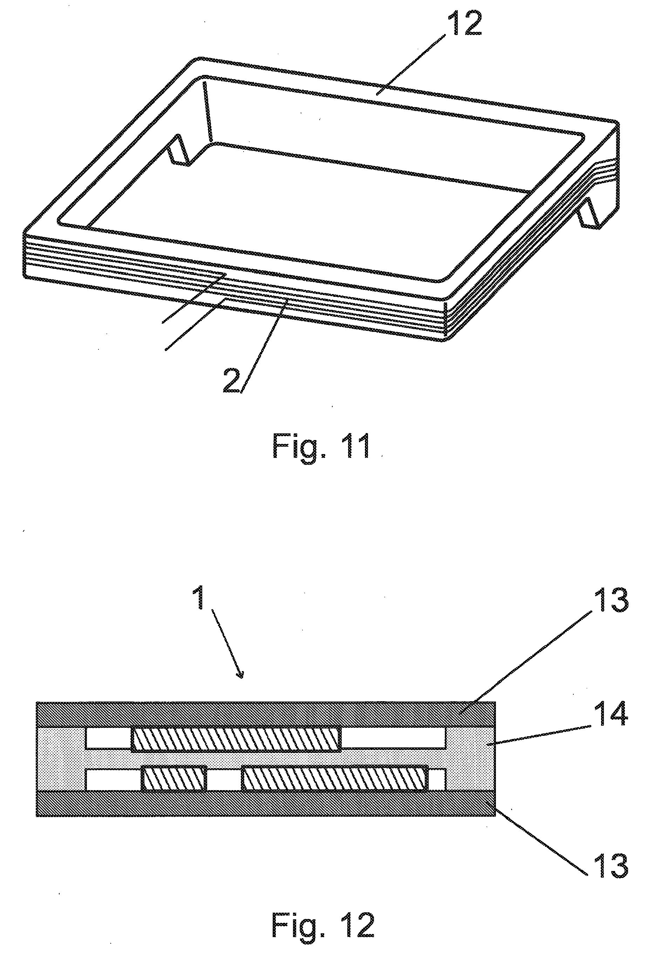

On the figure 11 there is a scheme depicting the antenna's carrier in the sate before it is inserted into the removable memory card's body.

On the figure 12 there is a cross-section of the layers of the removable memory card where the outer surfaces of the removable memory case are made of a material containg powder ferrite.

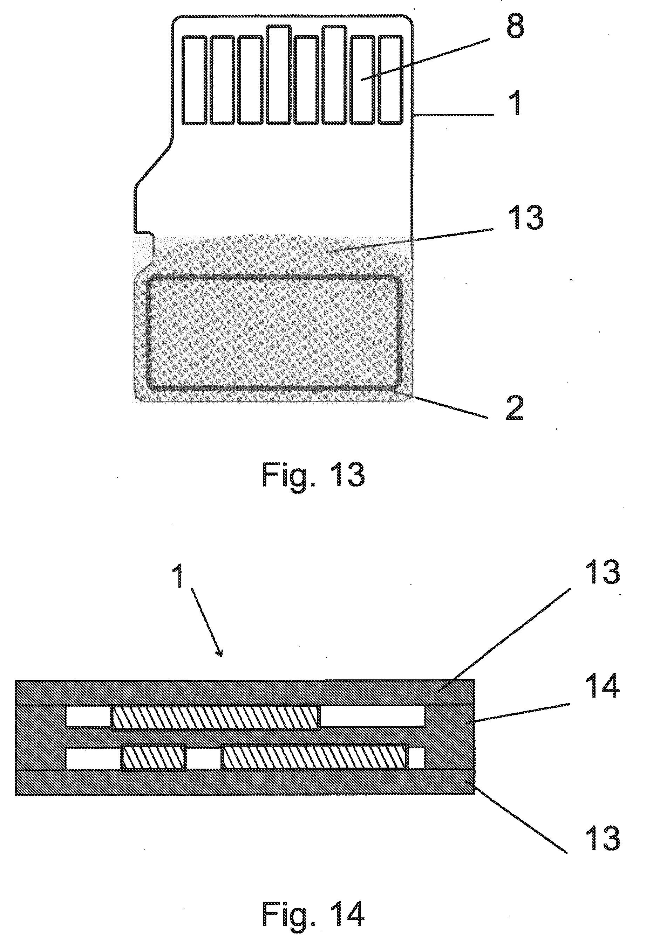

On the figure 13 there is a view of the removable memory card's surface - local penetration of powder ferrite on the surfaces that are opposite to the antenna's location is depicted.

On the figure 14 there is a cross-section of the layers of the removable memory card; even the outer surfaces of the card's case with the powder ferrite within the entire material volume and the core of the card are depicted.

### Realization examples

### Example 1

In this example, according to figures 1 to 9 the removable memory card 1 is of a microSD card format; its size, shape and structure is in accordance with the specification of the SD Card Association.

The removable memory card 1 has a core made from a PCB (printed circuit board), which creates the PCB layer 5. On both sides of the PCB layer 5 there is located an antenna 2. On one side the antenna 2 has three coils and on the other side it has four coils. In this example the coils are created on the external circuit of the rectangular frame from a nonconductive material in a way that the conductive path is created within the perimetric grooves. In this example the antenna 2 is of a rectangular shape with parameters of 5 x 10,5 mm.

Along both sides of the PCB layer 5 there is a layer with components 6, marked as the first and the second layer 11 with components 6. Under the components 6 it is necessary to imagine individual electronic elements of the removable memory card, such as chips, conductive connections, controllers, memory circuits, Secure Elements, ASIC (application-specific integrated circuit) units etc. The layers with components 6 are located along the edge of the removable memory card 1 where the edge overspans the height of the components and it corresponds to the thickness of components 6. The ferrite layer 3 is on both sides of the layers 11 with components 6. Due to its electric non-conductibility, the ferrite layer 3 also replaces the outer plastic case of components 6 in the same way as it is known to us in the present solutions.

In this example, the ferrite layer 3 is placed on both surfaces of the removable memory card 1. On one surface, the ferrite layer 3 goes around the contacts 8 and it does not cover them and on the opposite side of this surface - next to the outer edge 10, the ferrite layer 3 ends 1,5 mm from the outer edge 10. The upper metal layer 4, which in this example is created from aluminum, also has the same shape and the same location.

On the other surface of this removable memory card 1 there is a ferrite layer 3 on the entire surface with the exception of the uncovered zone 9, where there is again an uncovered strip that is 1,5 mm wide. One side of the rectangular, into the shape of which the antenna is coiled 2, is next to the outer edge 10 and it is located in this uncovered zone 9.

The connection between individual layers is assured by connecting layers 6. These contain a glue which can be applied e.g. by spraying over shape templates.

In this example, the antenna 2 has 3+4 coils and is designed in such a way that it has the inductivity of approximately 1,8 µH and the resistance of approximately 18 Ohm. That part of the antenna 2 that is under the uncovered zone 9, is parallel to the outer edge 10. The dual layer of ferrite and metal is approximately 170 µm thick. In this configuration the mistuning of the antenna 2 caused by different characteristics of mobile communication devices' slots is smaller than 1%.

On one surface, in the metal layer, there is a stamped hologram of the issuer of the payment card that is within the circuits of the removable memory card; on the other surface, there is the Logomotion hologram.

### Example 2

In accordance with this example the removable card 1, shown in the figures 10 and 11, has the same external size and shape as in the first example, so it is in the format of the microSD card. The difference in comparison to the first configuration example is in the layering. In this example there are foils with three layers - metal-ferrite-metal on both surfaces of the removable memory card 1. The metal layer 4 consists of copper, respectively of an alloy containg high percentage of copper. The antenna 2 has eight conductive coils, which create a loop on the rectangular carrier 12. The rectangular carrier 12 is shaped in such a way that the protrusion on the rectangular carrier 12 fits into the fastening in the body of the removable memory card 1.

Next to the outer edge 10 the triple layer of metal-ferrite-metal is placed up to the rim of the outer edge 10 and the uncovered zone 9 presents the edge itself of an approximate thickness of 1 mm. The connection layers are not shown in the figure 10 and the connection is created by melting in the neighbouring layers 3, 4, 5, 11 into the foundation substrate. The order of layers is the following: metal layer 4; ferrite layer 3; metal layer 4; layer with components 11; PCB layer 5; metal layer 4; ferrite layer 3; metal layer 4.

### Example 3

In this example, according to the figures 12 and 13, there is a removable memory card 1 of the microSD card format. The removable memory card 1 is produced in such a way that the ferrite powder with the granularity of 50 µm is added into a plastic granulate in the injection moulding, whereas the volume share of the ferrite powder represents 35% of the compound's volume. The external parts of the card's case 13 are injected after the electronic elements are connected to the PCB board in the core 14. This injection is done using a multiple injection mould. In this example multi-injecting orifices combined with ejectors are used and only the injecting orifice that is close to the antenna's location 2 is supplied with the melted plastic mass with ferrite powder. The second injecting orifice assuring the creation of the same case 13, is supplied with the melted mass without the ferrite powder. By directing the flow of the material into injecting orifices, it is possible to create the required border between the area with and the area without ferrite. The external part of the case 13 in the zone with contacts 8 is without the ferrite powder. The core 14 of card's body, including the outer edge, is moulded from the material without the ferrite powder.

By using this method the required penetration of ferrite powder in external layers of the case, particularly in the section of the removable memory card situated at the entrance of the mobile communication device's slot, can be achieved.

### Example 4

In this example, according to the figure 14, there is a removable memory card 1 having the core 14 and also the case 13 of the same structure. The material contains 40% of ferrite powder which is homogenously immixed into the plastic granulate, from which the body's core 14 as well as the case 13 are moulded.

The side surface of the antenna's frame 2 forms part of the outer edge; this surface is not covered by the material containing ferrite powder after the card's body is encased. It is a configuration in which the entrance zone directed outwards from the slot is not shielded electromagnetically.

### Industrial usability

The industrial usability is obvious. According to this invention it is possible to repeatedly produce and use removable memory cards with an antenna located in their body. The emitting features of the antenna located on the outer edge of the removable memory card are stabilized significantly regardless of shielding and transmission features of the surrounding environment.

**List of related symbols:**

| | |
|---|---|
| 1- a removable memory card | |
| 2- an antenna | |
| 3- a ferrite layer | |
| 4- a metal layer | |
| 5- a PCB layer | |
| 6- a connecting layer | |
| 7- a component | |
| 8- contacts | |
| 9- an uncovered zone | |
| 10- the outer edge | |
| 11- the component layer | |
| 12- the antenna carrier | NFC - Near Field Communication |
| 13- the card's case | PCB - printed circuit board |
| 14- the card's core | ASIC - application-specific integrated circuit |

## Claims

1. A removable memory card with an antenna, where the antenna (2) is on a surface or in a body of the removable memory card (1); comprising components (7) located under the surface of the removable memory card (1); on the surface there are contacts (8) for a connection with a mobile communication device's circuits; the antenna (2) is placed in such a way that one part of the antenna (2) is bordering an outer edge (10) which is different from the edge where the contacts (8) are located; at least one surface of the removable memory card (1) is covered with a ferrite layer (3) and a metal layer (4), the metal layer (4) is placed above the ferrite layers (3) on the surface of the removable memory card (1), **characterized in that** the metal layer (4) shields the antenna (2) with exception of an uncovered zone (9) that is a strip along the outer edge (10).

2. A removable memory card with an antenna according to the claim 1 is **characterized in that** the metal layer (4) is located on the ferrite layer (3) from an outer side of the removable memory card (1) or it is located on both sides of the ferrite layer (3).

3. A removable memory card with an antenna according to the claims 1 or 2 is **characterized in that** both surfaces of the removable memory card (1) are covered by the ferrite layer (3) and the metal layer (4), where the metal layer on the surface with contacts (8) does not cover the contacts (8) and the uncovered zone (9) ane the metal layer on the opposite surface of the removable memory card (1) covers the entire surface with exception of the uncovered zone (9).

4. A removable memory card with an antenna according to any of the claims 1 to 3 is **characterized in that** the outer edge (10) lies opposite to the edge with the contacts (8), and the uncovered zone (9) is a strip with a thickness of up to 2 mm.

5. A removable memory card with an antenna according to any of the claims 1 to 4 is **characterized in that** the metal layer (4) contains copper and/or aluminium, and the ferrite layer (3) contains 50 %, preferably more than 60% of ferrite.

6. A removable memory card with an antenna according to any of the claims 1 to 5 i s **characterized in that** a mutual thickness of the ferrite layer (3) and the metal layer (4) or the ferrite layer (3) and two metal layers (4) is between 0,05 and 0,20 mm, preferrably 0,17 mm.

7. A removable memory card with an antenna according to any of the claims 1 to 6 i s **characterized in that** the antenna (2) is formed on a carrier (12), the shape of which with a protrusion corresponds to a population on the outer edge (10) of the removable memory card's (1) body.

8. A removable memory card with an antenna according to any of the claims 1 to 7 is **characterized in that** at least one part of the card's outer surface (2) is made of a binding material and a powder ferrite.

9. A removable memory card with an antenna according to the claim 8 is **characterized in that** the powder ferrite forms at least 25% of a material volume, preferably more than 30% of the material volume, and the ferrite particles have a granularity between 20 µm and 70 µm.

10. A removable memory card with an antenna according to the claims 8 or 9 is **characterized in that** the powder ferrite is placed to the material of the card's body by blending it with the binding material before the card's body is mould injected.

11. A removable memory card with an antenna according to any of the claims 8 to 10 is **characterized in that** the powder ferrite is **in that** part of the case (13), that is adjacent to the antenna (2) or that the powder ferrite is in the entire volume of the card's body material, preferably with the exception of the outer edge that is opposite to the zone with the contacts (8).

12. A removable memory card with an antenna according to any of the claims 1 to 11 is **characterized in that** the order of layers is:
- a metal layer (4);
- a ferrite layer (3);
- at least one layer (11) with components (7);
- a PCB layer (5);
- a ferrite layer (3);
- a metal layer (4).

13. A removable memory card with an antenna according to the claim 12, is **characterized in that** the ferrite layer (3) is equipped with a metal layer (4) that is on both sides in the form of a triple layer with the order - a metal layer (4), a ferrite layer (3), a metal layer (4).

14. A removable memory card with an antenna according to the claims 12 or 13 is **characterized in that** between the ferrite layer (3) and the layer (11) with components (7) and between the PCB layer (5) and layers (11) with components (7) there is a connective layer (6).

15. A a removable memory card with an antenna according to any of the claims 12 to 14 is **characterized in that** the layer (11) with components (7) has a fill-in frame around the edge that over spans the height of the components (7).

## Patentansprüche

1. Entfernbare Speicherkarte mit einer Antenne, wobei sich die Antenne (2) auf der Oberfläche oder im Körper der Speicherkarte (1) befindet; umfasst sich unter der Oberfläche der Speicherkarte (1) befindende Komponenten (7); auf der Oberfläche befinden sich Kontakte (8) für den Anschluss an die Schaltungen mobiler Kommunikationsgeräte; die Antenne (2) ist so platziert, dass ein Teil der Antenne (2) an einen äußeren Rand (10) grenzt; mindestens eine Oberfläche der Speicherkarte (1) ist mit einer Ferritschicht (3) und einer Metallschicht (4) bedeckt, wobei die Metallschicht (4) sich über den Ferritschichten (3) auf der Oberfläche der Speicherkarte (1) befindet und schirmt die Antenne (2) ab mit Ausnahme einer unbedeckten Zone (9), die **dadurch charakterisiert ist, dass** die unbedeckte Zone (9) sich ein Streifen entlang dem äußeren Rand (10) bildet, der ein anderer Rand ist als derjenige, wo sich die Kontakte befinden (8).

2. Entfernbare Speicherkarte mit einer Antenne laut dem Anspruch 1 **ist dadurch charakterisiert, dass** sich die Metallschicht (4) auf der Ferritschicht (3) auf der Außenseite der Speicherkarte (1) oder auf beiden Seiten der Ferritschicht (3) befindet.

3. Entfernbare Speicherkarte mit einer Antenne laut dem Ansprüchen 1 und 2 **ist dadurch charakterisiert, dass** beide Oberflächen der Speicherkarte (1) mit der Ferritschicht (3) und der Metallschicht (4) bedeckt sind, wobei die Metallschicht auf der Oberfläche mit Kontakten (8) die Kontakte (8) und die unbedeckte Zone (9) nicht bedeckt und die Metallschicht auf der gegenüberliegenden Oberfläche der Speicherkarte (1) die gesamte Oberfläche mit Ausnahme der unbedeckten Zone (9) bedeckt.

4. Entfernbare Speicherkarte mit einer Antenne laut jeglichem der Ansprüche 1 bis 3 **ist dadurch charakterisiert, dass** der äußere Rand (10) gegenüber dem Rand mit den Kontakten (8) liegt und die unbedeckte Zone (9) ein Streifen mit einer Dicke von bis zu 2 mm ist.

5. Eine Speicherkarte mit einer Antenne laut jeglichem der Ansprüche 1 bis 4 **ist dadurch charakterisiert, dass** sich die Metallschicht (4) Kupfer und/oder Aluminium und die Ferritschicht (3) 50 %, vorzugsweise 60 % von Ferrit enthält.

6. Entfernbare Speicherkarte mit einer Antenne laut jeglichem der Ansprüche 1 bis 5 **ist dadurch charakterisiert, dass** die gemeinsame Dicke der Ferritschicht (3) und der Metallschicht (4) oder der Ferritschicht (3) und zweier Metallschichten (4) zwischen 0,05 und 0,20 mm liegt, vorzugsweise 0,17 mm beträgt.

7. Entfernbare Speicherkarte mit einer Antenne laut jeglichem der Ansprüche 1 bis 6 **ist dadurch charakterisiert, dass** die Antenne (2) auf einem Träger (12) ausgebildet ist, dessen Form mit einem Überstand der Besatzung auf dem äußeren Rand (10) des Körpers der Speicherkarte (1) entspricht.

8. Entfernbare Speicherkarte mit einer Antenne laut jeglichem der Ansprüche 1 bis 7 **ist dadurch** h **charakterisiert, dass** mindestens ein Teil der äußeren Oberfläche der Karte (2) aus einem Bindematerial und Pulverferrit gefertigt ist.

9. Entfernbare Speicherkarte mit einer Antenne laut dem Anspruch 8 **ist dadurch charakterisiert, dass** das Ferrit mindestens 25% des Materialvolumens, vorzugsweise 30% des Materialvolumens ausmacht und die Ferritpartikel eine Körnung zwischen 20 µm und 70 µm haben.

10. Entfernbare Speicherkarte mit einer Antenne laut dem Anspruch 8 oder 9 **ist dadurch** h **charakterisiert, dass** s das Pulverferrit zum Material des Kartenkörpers platziert wird, indem es vor dem Spritzguss des Kartenkörpers mit dem Bindematerial vermischt wird.

11. Entfernbare Speicherkarte mit einer Antenne laut jeglichem der Ansprüche 8 bis 10 **ist dadurch charakterisiert, dass** sich das Pulverferrit in dem Teil des Gehäuses (13) befindet, das der Antenne (2) anliegt, oder dass sich das Pulverferrit im ganzen Volumen des Kartenkörpermaterials befindet, vorzugsweise mit Ausnahme des äußeren Randes, der gegenüber der Zone mit den Kontakten (8) liegt.

12. Entfernbare Speicherkarte mit einer Antenne laut jeglichem der Ansprüche 1 bis 11 ist durch die folgende Reihenfolge von Schichten charakterisiert:
- eine Metallschicht (4);
- eine Ferritschicht (3);
- mindestens eine Schicht (11) mit Komponenten (7);
- eine Leiterplattenschicht (5);
- eine Ferritschicht (3);
- eine Metallschicht (4);

13. Entfernbare Speicherkarte mit einer Antenne laut dem Anspruch 12 **ist dadurch charakterisiert, dass** die Ferritschicht (3) mit einer Metallschicht (4) versehen ist, die auf beiden Seiten die Form einer dreifachen Schicht hat, und zwar mit der Reihenfolge - eine Metallschicht (4), eine Ferritschicht (3), eine Metallschicht (4).

14. Entfernbare Speicherkarte mit einer Antenne laut dem Anspruch 12 oder 13 **ist dadurch charakterisiert, dass** zwischen der Ferritschicht (3) und der Schicht (11) mit Komponenten (7) und zwischen der Leiterplattenschicht (5) und den Schichten (11) mit Komponenten (7) sich eine Bindeschicht (6) befindet.

15. Entfernbare Speicherkarte mit einer Antenne laut jeglichem der Ansprüche 12 bis 14 **ist dadurch charakterisiert, dass** die Schicht (11) mit Komponenten (7) einen Füllrahmen rund um den Rand hat, der die Höhe der Komponenten (7) überspannt.

## Revendications

1. Carte mémoire amovible avec antenne (2) située à la surface ou dans le corps de la carte mémoire amovibe (1) ; les composants (7) se trouvent en dessous de la surface de la carte mémoire amovible (1) ; à la surface, des contacts (8) servent à la connection avec les circuits d'appareil portable de communication ; l'antenne (2) est placée de sorte qu'une partie de celle-ci (2) longe la bordure extérieure (10) ; au moins une surface de la carte mémoire amovible (1) est couverte d'une couche de ferrite (3) et d'une couche de métal (4), la couche de métal (4) se trouve au-dessus des couches de ferrite (3) à la surface de la carte mémoire amovible (1), protégeant ainsi l'antenne (2) sauf une zone non couverte (9) en forme de bande le long de la bordure extérieure (10) autre que celle où se trouvent les contacts (8).

2. Carte mémoire amovible avec antenne conformément à la revendication 1., **sachant que** la couche de métal (4) couvre la couche de ferrite (3) depuis la bordure extérieure de la carte mémoire (1) ou est étalée sur les deux côtés de la couche de ferrite (3).

3. Carte mémoire amovible avec antenne conformément aux revendications 1. ou 2., **sachant que** les deux surfaces de la carte mémoire amovible (1) sont couvertes d'une couche de ferrite (3) et d'une couche de métal (4), que la couche de métal sur la surface avec les contacts (8) ne couvre pas les contacts (8) et la zone nue (9) et que la couche de métal sur le côté opposé de la carte mémoire amovible (1) couvre la surface entière à l'exception de la zone nue (9).

4. Carte mémoire amovible avec antenne conformément aux revendications 1. à 3., **sachant que** la bordure extérieure (10) est opposée à celle contenant les contacts (8), et la zone nue (9) est en forme de bande d'une épaisseur inférieure ou égale à 2 mm.

5. Carte mémoire amovible avec antenne conformément aux revendications 1. à 4., **sachant que** la couche de métal (4) contient du cuivre et/ou de l'aluminium, et la couche de ferrite (3) contient 50%, de préférence 60% de ferrite.

6. Carte mémoire amovible avec antenne conformément aux revendications 1. à 5., **sachant que** l'épaisseur mutuelle de la couche de ferrite (3) et de la couche de métal (4), ou de la couche de ferrite (3) et des deux couches de métal (4) se situe entre 0,05 et 0,20 mm, le meilleur étant 0,17 mm.

7. Carte mémoire amovible avec antenne conformément aux revendications 1. à 6., **sachant que** l'antenne (2) est formée sur un porteur (12), dont la forme du porteur (12) protubérante correspond à la population sur la bordure extérieure (10) du corps de la carte mémoire extérieure (1).

8. Carte mémoire amovible avec antenne conformément aux revendications 1. à 7., **sachant qu**'au moins une partie de la surface externe de la carte (2) est faite d'un matériau liant et de poudre de ferrite.

9. Carte mémoire amovible avec antenne conformément à la revendication 8., **sachant que** la poudre de ferrite forme au moins 25% du volume de matériau, de préférence 30%, et les particules de ferrite ont une granulosité de 20µm et 70 µm.

10. Carte mémoire amovible avec antenne conformément à la revendication 8. ou 9., **sachant que** la poudre de ferrite est jointe au matériau du corps de la carte en la mélangeant au matériau liant avant que le corps de la carte soit injecté moulé.

11. Carte mémoire amovible avec antenne conformément aux revendications 8. à 10., **sachant que** la poudre de ferrite est incorporée à la partie de la boîte (13) adjascente à l'antenne (2), ou que la poudre de ferrite constitue le volume entier du matériau du corps de la carte, de préférence à l'exception de la bordure extérieure qui se trouve à l'opposé de la zone des contacts (8).

12. Carte mémoire amovible avec antenne conformément à quelconque des revendications 1 à 11, **sachant que** l'ordre des couches est le suivant :
- Couche de métal (4)
- Couche de ferrite (3)
- Au moins une couche (11) avec composants (7)
- Couche PCB (5)
- Couche de ferrite (3)
- Couche de métal (4).

13. Carte mémoire amovible avec antenne conformément à la revendication 12., **sachant que** la couche de ferrite (3) est munie d'une couche de métal (4) sur les deux côtés, et ce sous forme d'une triple couche dans l'ordre suivant : couche de métal (4), couche de ferrite (3), couche de métal (4).

14. Carte mémoire amovible avec antenne conformément à la revendication 12 ou 13., **sachant qu**'entre la couche de ferrite (3) et la couche (11) de composants (7) d'une part, et entre la couche PCB (5) et les couches (11) des composants (7) d'autre part, il y a une couche de liaison (6).

15. Carte mémoire amovible avec antenne conformément à quelconque des revendications 1 à 11, **sachant que** la couche (11) avec les composants (7) est encadrée sur toute la bordure qui recouvre les composants (7).
